Europäisches Patentamt

European Patent Office

Office européen des brevets

(19)

(11) Veröffentlichungsnummer: **0 110 174**
**B1**

(12) # EUROPÄISCHE PATENTSCHRIFT

(45) Veröffentlichungstag der Patentschrift:
**07.01.87**

(51) Int. Cl.⁴: **A 01 N 25/04,** A 01 N 25/30

(21) Anmeldenummer: **83110887.3**

(22) Anmeldetag: **02.11.83**

(54) Flüssige pestizide Mittel in Form von Suspensionskonzentraten.

(30) Priorität: **05.11.82 DE 3240862**

(43) Veröffentlichungstag der Anmeldung:
**13.06.84 Patentblatt 84/24**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**FR - A - 2 144 415**
**US - A - 3 157 486**
**US - A - 3 986 979**

(73) Patentinhaber: **HOECHST AKTIENGESELLSCHAFT,
Postfach 80 03 20, D-6230 Frankfurt am Main 80 (DE)**

(72) Erfinder: **Albrecht, Konrad, Dr., Sodener Strasse 64,
D-6233 Kelkheim (Taunus) (DE)**
Erfinder: **Frisch, Gerhard, Dr., Westerwaldstrasse 7,
D-6393 Wehrheim (DE)**

**Beschreibung**

Die vorliegende Erfindung befasst sich mit der Flüssigformulierung von Pestiziden in Form von Suspensionskonzentraten.

Im allgemeinen werden Pestizid-Werkstoffe in Form von emulgierbaren Konzentraten, Spritzpulvern oder Suspensionskonzentraten angewandt. Wirkstoffe, die in technischen Lösungsmitteln schwer löslich sind, werden im allgemeinen in Form von Spritzpulvern zur Anwendung gebracht. Zur Herstellung dieser Formulierungen werden jedoch kostspielige Mahl- und Filteranlagen und häufig teure Trägerstoffe benötigt. Spritzpulver haben ausserdem den Nachteil, bei der Handhabung zu stäuben. Sie lassen sich nur schlecht dosieren. Der Anwender kann durch solche stäubende Zubereitungen leicht kontaminiert werden und Schaden nehmen. Spritzbrühen, die aus Spritzpulvern hergestellt sind, neigen zur Inhomogenität. Die Wirkstoff- und Feststoffteilchen sedimentieren relativ schnell.

Wässrige Suspensionen hingegen besitzen diese Nachteile der Spritzpulver nicht. Da Filteranlagen zu deren Herstellung nicht benötigt werden, ist der apparative Aufwand relativ gering. Schwierigkeiten bereitet jedoch die Entwicklung von lagerstabilen und für die Praxis geeigneten Suspensionskonzentraten. Während emulgierbare Konzentrate und Spritzpulver als Einphasensysteme vorliegen, stellen wässrige Suspensionskonzentrate fester Wirkstoffe Zweiphasensysteme (fest/flüssig) dar. Diese sind jedoch in der Regel instabil und neigen zur Entmischung, wobei sich diese Tendenz mit zunehmender Lagerungszeit und -temperatur verstärkt. In der Praxis müssen Suspensionskonzentrate jedoch über 2 Jahre lagerungsstabil sein; sie müssen ferner giessfähig bleiben. Das Verfestigen von Suspensionen und/oder irreversiblen Sedimentbildungen müssen ausgeschlossen werden.

Es existieren zwar theoretische Überlegungen über die Bedingungen zum Aufbau stabiler Suspensionen, jedoch sind direkte Vorhersagen über optimale Formulierungszusätze aufgrund der Vielzahl der zu berücksichtigenden Kriterien nicht möglich. So genügt es beispielsweise in der Praxis meist nicht, das Suspensionsverhalten einer einzelnen Produktionscharge zu untersuchen, da geringfügige Änderungen der Anteile von Nebenkomponenten in den einzelnen Wirkstoffchargen die Stabilität der Dispersionen entscheidend beeinträchtigen können.

Aus der Literatur sind zahlreiche Zusammensetzungen von Suspensionskonzentraten bekannt. Bekannte Pestizide wie beispielsweise Triphenylzinnverbindungen, Harnstoffe wie Diuron oder Linuron, Triazine wie Simazin, Atrazin oder die Wirkstoffe Carbendazim, Chlortoluron, Maneb, Mancozeb und Endosulfan können unter Zuhilfenahme von partiell hydrolysierten Polyvinylacetaten, wie in der US-PS 4071617 beschrieben, nicht optimal formuliert werden. Bei Anwendung dieser Formulierungszusätze bilden sich zähe Sedimente, die nicht redispergierbar sind. Der gleiche Effekt tritt auf, wenn nichtionische Emulgatoren, Pflanzengummen und anionische oberflächenaktive Mittel zur Formulierung eingesetzt werden, beispielsweise analog US-PS 3948636 oder analog GB-PS 148010.

Nichtionische Emulgatoren, die Polyglykolether-Gruppierungen enthalten, verursachen häufig Kristallbildungen, so beispielsweise bei dem relativ schwer löslichen Pestizid Diuron. Die Verwendung von hochpolymeren Polyetherglykolen neben Dispergiermitteln, auch unter Zusatz von Kieselsäuren (s. DE-OS 2547968; DE-OS 2651046) führt zu Dispersionen, die bei ihrer Lagerung irreversibel Bodensätze abscheiden. Formuliert man Pestizide unter Verwendung von polycarboxylierten Vinylpolymeren, wie beispielsweise von Polymethacrylaten (US-PS 3060084), scheiden sich ebenfalls sehr häufig bei der Lagerung zähe Sedimente ab. Unbrauchbare, nicht lagerstabile Suspensionskonzentrate, die bei 40 bis 50 °C verdikken oder zähe Absätze bilden, erhält man auch, wenn man Pestizide, wie die obengenannten Verbindungen, mittels eines polycarboxylierten Vinylpolymers gemäss DE-OS 2651046 formuliert.

Dispersionen, die gemäss US-PS 3157486 als Formulierungshilfsmittel Ligninsulfonate oder solche, die Alkalisalze von Ethylpolyglykoletherphosphatestern in Verbindung mit Natriumsalzen von Kondensationsprodukten aus sulfonierten Phenolen und Formaldehyd gemäss EP-PS 22925 enthalten, sind ebenfalls im Falle der obengenannten Wirkstoffe nicht lagerstabil. Die mit den obengenannten Formulierungshilfsmitteln erhalten Suspensionskonzentrate sind ausserdem häufig in den zu ihrer Herstellung benötigten Reibkugelmühlen nicht ausreichend mahlfähig. Dies ist insbesondere bei solchen Formulierungen der Fall, deren Viskositäten stark temperaturabhängig sind, so dass die Suspensionen bei Temperaturen zwischen 35 und 55 °C, die während des Mahlprozesses auftreten, verdicken.

Es wurde nun gefunden, dass man eine überraschend grosse Zahl von Pestiziden wie Insektiziden, Akariziden, Herbiziden, und Fungiziden als flüssige, lagerstabile Suspensionskonzentrate formulieren kann, wenn man als Formulierungshilfsmittel einen Sulfobernsteinsäurehalbester, hergestellt aus Natriumsulfit, Maleinsäureanhydrid und einem Alkylphenolpolyglykolether, zusammen mit einem Gemisch aus gleichen Teilen Ligninsulfonsäuresalz und einem quellfähigen Erdalkalisilikat verwendet.

Gegenstand der Erfindung sind daher flüssige pestizide Mittel in Form von wässrigen Suspensionskonzentraten, die als Wirkstoff das Insektizid Endosulfan, ein Fungizid aus der Gruppe der Triphenylzinnverbindungen, Carbendazim, Maneb oder Mancozeb oder als Herbizid ein Triazinderivat oder ein Harnstoffderivat enthalten, dadurch gekennzeichnet, dass sie neben dem Wirkstoff oder Wirkstoffgemisch ein Sulfobernsteinsäurehalbester-Alkalisalz, hergestellt durch Umsetzen eines Polyglykolethers eines Kondensationsproduktes von einem Monooctyl- oder Monononylphenol und Formaldehyd bei einem Molverhältnis Alkylphenol zu Formaldehyd von 2:1 bis 10:9, wobei der Polyglykolether 2 bis 8 Mol Alkylenoxideinheiten, bevorzugt Ethylenoxid, pro Mol Alkylphenol enthält, mit Maleinsäureanhydrid und einem Alkalisulfid, sowie ein Alkalisalz einer Ligninsulfonsäure im Gemisch mit gleichen Teilen eines quellfähigen Erdalkalisilikats enthalten.

Das erfindungsgemäss zu verwendende Sulfobernsteinsäurehalbester-Alkalisalz wird analog der DE-PS 2132405 hergestellt. Als Alkalisulfit wird vorzugsweise Natriumsulfit verwendet.

Unter einem Alkalisalz des Sulfobernsteinsäurehalbesters ist insbesondere das Natriumsalz zu verstehen.

Ein bevorzugter Sulfobernsteinsäurehalbester kann beispielsweise aus 3 Mol Nonylphenol, 18 Mol Ethylenoxid, 2 Mol Formaldehyd, 3 Mol Natriumsulfit und 3 Mol Maleinsäureanhydrid hergestellt werden und als trockenes Pulver oder in Form einer wässrigen Lösung (in der Regel 35%) eingesetzt werden.

Als Alkalisalz einer Ligninsulfonsäure wird vorwiegend das Natriumsalz verwendet. Als quellfähige Erdalkalisilikate kommen insbesondere Kalzium-, Magnesiumsilikate vorzugsweise das Mineral Montmorillionit in Frage. Ein Gemisch zu gleichen Teilen aus Ligninsulfonsäure-Natriumsalz und Montmorillionit ist im Handel unter dem Namen ®Darvan Nr. 3 der Firma Vanderbilt Corp. erhältlich.

Als Triphenylzinnverbindung kommt insbesondere das Fungizid Fentinhydroxid in Frage. Unter den Triazinen sind bevorzugt die Herbizide, Atrazin, Simazin, unter den Harnstoffderivaten die Herbizide Diuron, Linuron, Monolinuron, Monuron, Isoproturon, Chlortoluron, insbesondere Diuron und Chlortoluron.

Zusätzlich können in den erfindungsgemässen Mitteln weitere übliche Formulierungshilfsmittel, zum Beispiel übliche Netz- und Dispergiermittel wie polyoxethylierte Alkylphenole, polyoxethylierte Fettalkohole, Tridecylalkoholpolyglykolether (®Genapol C-080), Alkyl- oder Alkylphenylsulfonate, ligninsulfonsaures Natrium, dibutylnaphthalinsulfonsaures Natrium oder oleylmethyltaurinsaures Natrium, Quellmittel wie quellfähige Alumosilikate oder quellfähige Polysaccharide, beispielsweise solche, die durch Fermentation von Kohlehydraten mittels Xanthomas-Mikroorganismen hergestellt werden, wie ®Kelzan, vorhanden sein. Ferner können als Formulierungshilfsmittel Entschäumer auf der Basis von Tributylphosphat oder auf Silicon-Basis wie Dialkylpolysiloxane und Antigefriermittel wie Ethylenglykol, Propylenglykol, Glyzerin, insbesondere Ethylenglykol, Safener wie beispielsweise Harnstoff und übliche Konservierungsmittel wie Benzoesäure, Sorbitansäure, Formaldehyd, Spuren fungizider Wirkstoffe u.a. zugegeben werden.

Zur Herstellung der erfindungsgemässen Suspensionskonzentrate kann übliches Trinkwasser oder Brauchwasser oder auch entsalztes Wasser eingesetzt werden, vorzugsweise jedoch solches von 20° dH (= deutsche Härte).

Die erfindungsgemässen Mittel können 5 bis 60 Gew.-%, insbesondere 15 bis 50 Gew.-% an Wirkstoff(en), 0,5 bis 30 Gew.-%, insbesondere 2 bis 20 Gew.-% des Sulfobernsteinsäurehalbester-Alkalisalzes, 0,5 bis 4 Gew.-% eines Gemisches aus gleichen Teilen eines Ligninsulfonsäure-Alkalisalzes und eines quellfähigen Erdalkalisilikates enthalten. Als Formulierungshilfsmittel können ferner 0 bis 0,2 Gew.-% eines quellfähigen Polysaccharides, 0 bis 30 Gew.-% der üblichen Netz- bzw. Dispergiermittel, 0 bis 10 Gew.-% Antigefriermittel, 0 bis 8 Gew.-% Safener, 0 bis 2 Gew.-% Konservierungsmittel und 0,2 bis 3 Gew.-% Entschäumer zugegeben werden. Der Rest zu 100 Gew.-% des erfindungsgemässen Mittels besteht aus Wasser.

Die erfindungsgemässen Suspensionskonzentrate sind dünnflüssig und gut giessfähig. Bei Temperaturerhöhungen bis 60 °C erhöht sich ihre Viskosität überraschenderweise nicht; sie kann sich sogar reversibel erniedrigen, ohne dass die Suspendiereigenschaften und die Verdünnbarkeit mit Wasser verloren gehen; dies ist insbesondere bei der Lagerung und Anwendung in heissen Klimazonen von Wichtigkeit. Erfindungsgemäss zusammengesetzte Produkte lassen sich gut vermahlen. Sie besitzen sehr gute Benetzbarkeiten und zeigen gute Verdünnbarkeitseigenschaften bei Zugabe von Wasser. Ausserdem weisen sie hervorragende Verträglichkeiten bei der Formulierung von Wirkstoffkombinationen auf, die häufig zwecks Verbreiterung des biologischen Wirkungsspektrums eingesetzt werden.

Fehlt nur eine Komponente der drei erfindungsgemässen Formulierungsbestandteile Sulfobernsteinsäurehalbester, Ligninsulfonsäuresalz und quellfähiges Erdalkalisilikat, so führt dies zum völligen Verlust der vorteilhaften Eigenschaften, wie sie die erfindungsgemässe Dreierkombination aufweist. Hierzu zählen insbesondere die Lagerstabilität, die Giessfähigkeit und das Viskositätsverhalten bei zunehmenden Lagertemperaturen. Ebenso gehen die vorteilhaften Eigenschaften der erfindungsgemässen Mittel dann verloren, wenn die Zusammensetzung des Sulfobernsteinsäurehalbesters durch Weglassen oder Zugabe einer Komponente variiert wird, so beispielsweise, wenn der Sulfobernsteinsäurehalbester keine Polyglykolether-Komponente aufweist.

Zur Herstellung der erfindungsgemässen Suspensionskonzentrate verrührt man beispielsweise den Wirkstoff bzw. das Wirkstoffgemisch in einer wässrigen Lösung oder einer Suspension der Formulierungshilfsmittel, zerkleinert die erhaltene grobteilige Suspension gegebenenfalls durch Vermahlen in einer Korund- oder Zahnscheibenmühle auf Feinheiten von ca. 200 Micron und mahlt das Produkt anschliessend in Reibkugelmühlen oder Sandmühlen, bis die Partikel der Suspension in Teilchengrössen von 0,1 bis 10 Micron, vorzugsweise unter 5 Micron vorliegen. Die Teilchengrössen werden mittels einer Scheibenzentrifuge oder einem Coulter-Counter-Zählgerät bestimmt.

Die Applikation der erfindungsgemässen Mittel erfolgt auf einfache Weise dadurch, dass man die Suspensionskonzentrate mit der gewünschten Menge Wasser verdünnt, kurz verrührt und auf die Pflanze appliziert. Die aus den erfindungsgemässen Suspensionskonzentraten erhaltenen Spritzbrühen zeichnen sich gegenüber den aus Spritzpulvern oder emulgierbaren Konzentraten hergestellten Spritzbrühen insbesondere durch die gleichmässige Verteilung des Wirkstoffes aus, die auch nach 24stündigem Stehen noch erhalten bleibt. Spritzpulversuspensionen entmischen sich dagegen sehr schnell; häufig hat sich nach einer Standzeit von ½ Stunde bereits die Hälfte des Wirkstoffes abgesetzt. Ebenso scheiden Emulsionen nach 1- bis 4stündigem Stehen häufig die emulgierten Konzentrate wieder ölig oder cremig aus.

Die erfindungsgemässen Suspensionskonzentrate zeigen darüber hinaus in den anwendungsfertigen Spritzbrühen überraschenderweise eine ausgezeichnete physikalische Verträglichkeit mit bekannten Herbizid-, Insektizid- und Fungizid-Präparaten, die in Form von Spritzpulvern oder emulgierbaren Konzentraten zugemischt werden können.

Die Erfindung wird durch die nachstehenden Beispiele erläutert.

### Beispiele 1–17

Fliessfähige, wässrige Suspensionskonzentrate der folgenden Wirkstoffe und Zusammensetzungen werden durch Vermahlen der Bestandteile in einer Reibkugelmühle mit Glaskugeln von 2 mm Durchmesser hergestellt (siehe nachfolgende Tabelle 1).

Die Dispersionen werden auf solche Feinheiten vermahlen, dass 90 Gew.-% der suspendierten Teilchen einen Durchmesser von unter 5 Mikron und 30 bis 40 Gew.-% der Teilchen einen Durchmesser < 1 Mikron besitzen, wobei die Teilchengrössen mit einer Scheibenzentrifuge gemessen wurden.

Giesst man jeweils 2 ml der so erhaltenen Suspensionskonzentrate in 99 ml Wasser, bildet sich spontan eine Suspensionsverdünnung, aus der selbst nach 12stündigem Stehen nur Spuren von sedimentierten Teilchen sichtbar werden. Im Gegensatz zu vergleichbaren Spritzpulvern beträgt hier die Suspendierbarkeit annähernd 100% (ermittelt nach den CIPAC-Prüfbestimmungen).

Die erhaltenen Dispersionen sind leicht giessfähig und bleiben auch nach 3 Monaten Lagerung unter Variation der Lagertemperatur zwischen −10 °C und +50 °C stabil.

Es werden keine Sedimentbildungen beobachtet. Mitunter kann sich lediglich ein Teil (5 bis 10 Vol.-%) der Trägerflüssigkeit abtrennen, dieser Teil wird jedoch durch zweimaliges Schütteln spontan wieder eingemischt. Ein Kristallwachstum der Wirkstoffpartikel ist nicht feststellbar. Mit Zunahme der Lagerungstemperatur erhöht sich die Viskosität der Dispersion nicht; sie wird im Gegenteil dünnflüssiger, ohne dass deren Stabilität leidet.

### Vergleichsversuch I

Verfährt man zur Herstellung von Dispersionen der Wirkstoffe der Tabelle 1 analog den Beispielen 2, 5, 6, 9, 12 und 13, ersetzt aber das Dispergiermittel 1 durch ein sulfogruppenhaltiges Kondensationsprodukt eines Alkylphenols mit Formaldehyd (verzichtet also auf die Polyglykoletherkomponente), beispielsweise durch [R]Rapidamin Reserve D, so bilden sich Suspensionskonzentrate, die bereits nach einem Monat Lagerung bei 50 °C instabil werden: es bilden sich gelartige bis zähe, teilweise feste Sedimente, die nicht redispergierbar sind. Diese Dispersionen sind nicht mehr verwendbar.

### Vergleichsversuch II

Verfährt man zur Herstellung von Dispersionen der Wirkstoffe gemäss den Beispielen 1, 2, 5, 6, 9, 12, 13, ersetzt aber das Dispergiermittel 2 durch das Natriumsalz einer mit Formaldehyd kondensierten Naphthalinsulfonsäure, wie beispielsweise [R]Tamol NNO oder durch ligninsulfonsaures Natrium alleine, so bilden sich bei der Lagerung zähe Sedimente. Den gleichen Effekt beobachtet man, wenn man an Stelle des obengenannten Naphthalinsulfonsäure-Kondensationsproduktes andere bekannte Dispergiermittel verwendet. Auch diese Dispersionen sind nicht mehr brauchbar.

### Patentansprüche

1. Flüssige pestizide Mittel in Form von wässrigen Suspensionskonzentraten, die als Wirkstoff das Insektizid Endosulfan, ein Fungizid aus der Gruppe der Triphenylzinnverbindungen, Carbendazim, Maneb oder Mancozeb oder als Herbizid ein Triazinderivat oder ein Harnstoffderivat enthalten, dadurch gekennzeichnet, dass sie neben dem Wirkstoff oder Wirkstoffgemisch ein Sulfobernsteinsäurehalbester-Alkalisalz, hergestellt durch Umsetzen eines Polyglykolethers eines Kondensationsproduktes von einem Monooctyl- oder Mononnonylphenol und Formaldehyd bei einem Molverhältnis Alkylphenol zu Formaldehyd von 2:1 bis 10:9, der 2 bis 8 Mol Alkylenoxideinheiten, insbesondere Ethylenoxideinheiten, pro Mol Alkylphenol enthält, mit Maleinsäureanhydrid und einem Alkalisulfit, sowie ein Alkalisalz einer Ligninsulfonsäure im Gemisch mit gleichen Teilen eines quellfähigen Erdalkalisilikats enthalten.

2. Flüssige pestizide Mittel gemäss Anspruch 1, dadurch gekennzeichnet, dass als quellfähiges Silikat das Mineral Montmorillonit eingesetzt wird.

3. Flüssige pestizide Mittel, dadurch gekennzeichnet, dass sie als Triphenylzinnderivat Fentinhydroxid, als Triazinderivat den Wirkstoff Atrazin oder Simazin und als Harnstoffderivat den Wirkstoff Diuron oder Chlortoluron enthalten.

4. Flüssige pestizide Mittel gemäss einem der Ansprüche 1–3, dadurch gekennzeichnet, dass sie 5 bis 60 Gew.-% eines pestiziden Wirkstoffes oder Wirkstoffgemisches, 0,5 bis 30 Gew.-% eines Sulfobernsteinsäurehalbester-Alkalisalzes und 0,5 bis 4 Gew.-% eines Gemisches aus gleichen Teilen eines Ligninsulfonsäure-Alkalisalzes und eines quellfähigen Erdalkalisilikats enthalten.

5. Flüssige pestizide Mittel gemäss Anspruch 4, dadurch gekennzeichnet, dass sie zusätzlich 0 bis 0,2 Gew.-% eines quellfähigen Polysaccharids, 0 bis 3,0 Gew.-% übliche Netz- und Dispergiermittel, 0–10 Gew.-% Antigefriermittel, 0 bis 8 Gew.-% Safener, 0 bis 2 Gew.-% Konservierungsmittel und 0,2 bis 3 Gew.-% Entschäumer enthalten.

6. Verfahren zur Bekämpfung von Schadinsekten, -pflanzen oder -pilzen, dadurch gekennzeichnet, dass man auf diese bzw. die von ihnen befallenen Pflanzen oder Böden eine wirksame Menge eines pestiziden Mittels gemäss Ansprüchen 1 bis 5 aus wässrigen Verdünnungen aufbringt.

7. Verwendung eines pestiziden Mittels gemäss Ansprüchen 1 bis 5 zum Einsatz im Pflanzenschutz.

Tabelle 1

Gew.-%-Anteile der Komponenten

| Beispiel-Nr. | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| Endosulfan | 50 | 41 | 5 | – | – | – | – | – | – | – | – | – | – | – | – | – | – |
| Fentinhydroxid | – | – | – | 50 | 41,3 | 18,5 | – | – | – | – | – | – | – | – | – | – | – |
| Maneb | – | – | – | – | – | – | 30 | – | – | – | – | – | – | – | – | – | – |
| Mancozeb | – | – | – | – | – | – | – | 25 | – | – | – | – | – | – | – | – | – |
| Carbendazim | – | – | – | – | – | – | – | – | 30 | 20 | – | – | – | – | – | – | – |
| Diuron | – | – | – | – | – | – | – | – | – | – | 50 | 43 | – | – | – | – | – |
| Chlortoluron | – | – | – | – | – | – | – | – | – | – | – | – | – | – | – | 50 | 41 |
| Atrazin | – | – | – | – | – | – | – | – | – | – | – | – | 45 | – | 22,5 | – | – |
| Simazin | – | – | – | – | – | – | – | – | – | – | – | – | – | 45 | 22,5 | – | – |
| Dispergiermittel 1 (1⁺) | 7,5 | 5 | 2 | 5 | 4 | 4 | 20 | 21 | 50 | 1,85 | 4 | 4 | 3,5 | 3,5 | 3,5 | 7,5 | 5 |
| Dispergiermittel 2 (2⁺) | 1,5 | 1 | 0,5 | 2 | 1 | 1 | 1 | 1,5 | 4 | 1 | 1 | 1 | 0,5 | 0,5 | 0,5 | 1,5 | 1 |
| Oleyl-N-methyl-taurid-Natrium | 0,5 | 0,5 | 1,0 | – | – | – | 1 | – | – | 0,5 | – | – | – | – | – | 0,5 | 0,5 |
| Tridecylalkohol-polyglykolether | – | – | – | – | – | – | – | 2 | – | 2 | – | – | 0,5 | 1,5 | 1,5 | – | – |
| Poly-saccharid (3⁺) | 0,2 | 0,2 | 0,1 | 0,1 | 0,1 | 0,2 | 0,1 | 0,1 | 0,1 | – | 0,1 | 0,1 | 0,1 | 0,1 | 0,1 | 0,2 | 0,2 |
| Entschäumer (4⁺) | 2 | 2 | 3 | 2 | 2 | 2 | 2 | 2,4 | 2 | 3 | 1 | 1 | 3 | 3 | 3 | 2 | 2 |
| Harnstoff | – | – | – | 6 | 6 | 12 | – | – | – | – | – | – | – | – | – | – | – |
| Ethylglykol | 8 | 8 | 10 | – | – | – | 5 | 7 | – | 10 | 8 | 8 | 8 | 8 | 8 | 8 | 8 |
| Konservierungsmittel (5⁺) | 0,1 | 0,1 | – | 0,1 | 0,1 | 0,1 | – | – | – | – | 0,05 | 0,05 | 0,05 | 0,05 | 0,05 | 0,1 | 0,1 |
| Wasser | 30,2 | 42,2 | 78,4 | 34,8 | 45,5 | 62,2 | 40,9 | 41 | 13,9 | 61,65 | 35,85 | 42,85 | 39,35 | 38,35 | 38,35 | 30,2 | 42,2 |

(1⁺) Dispergiermittel 1 = Kondensationsprodukt aus 3 Mol Nonylphenol und 2 Mol Formaldehyd, oxyethyliert mit 18 Mol Ethylenoxid, umgesetzt mit 3 Mol Maleinsäureanhydrid und 3 Mol Natriumsulfit als 35%ige wässrige Lösung
(2⁺) = Dispergiermittel 2 Mischung eines Na-Salzes einer Ligninsulfonsäure mit Montmorillionit zu gleichen Teilen (ᴿDarvan Nr. 3, Vanderbilt Corp. USA)
(3⁺) = ⁽ᴿ⁾Kelzan Kelce Corp., USA
(4⁺) = Siliconentschäumer SE 2 der Wacker Chemie GmbH
(5⁺) = ⁽ᴿ⁾Bronidox L der Firma Henkel AG

## Claims

1. Liquid pesticidal compositions in the form of aqueous suspension concentrates, comprising as active substance the insecticide Endosulfan, a fungicide from the group of the triphenyltin compounds, Carbendazim, Maneb or Mancozeb or as herbicide a triazine derivate or a urea derivate characterized in that they contain in addition to the active substance or mixture of active substances an alkali metal salt of sulfosuccinic acid semiester prepared by reaction of a polyglycol ether of a condensation product of a monooctyl- or monononylphenol and formaldehyde at a molar ratio alkylphenol to formaldehyde in the range of from 2:1 to 10:9, and from 2 to 8 mols of alkylene oxide moieties, especially ethylene oxide moieties per mol of alkylphenol with maleic anhydride and an alkali metal sulfite, and an alkali metal salt of a ligninsulfonic acid in admixture with identical parts of a swelling alkaline earth metal silicate.

2. Liquid pesticidal compositions as claimed in claim 1, wherein the mineral montmorillionite is used as swelling silicate.

3. Liquid pesticidal compositions as claimed in claim 1, which comprise as a triphenyltin hydroxide fentin hydroxide, as a triazine derivate the active substance atrazine or simazine and as a urea derivate the active substance diuron or chlorotoluron.

4. Liquid pesticidal compositions as claimed in claims 1 to 3, which comprise from 5 to 60 weight % of a pesticidal substance or mixture of substances, from 0.5 to 30 weight % of an alkali metal salt of a sulfosuccinic acid semiester, and from 0.5 to 4 weight % of a mixture of identical parts of an alkali metal salt of ligninsulfonic acid and a swelling alkaline earth metal silicate.

5. Liquid pesticidal compositions as claimed in claim 4, which comprise in addition from 0 to 0.2 weight % of a swelling polysaccharide, from 0 to 3.0 weight % of usual wetting or dispersing agent, from 0 to 10 weight % of anti-freeze agent, from 0 to 8 weight % of safener, from 0 to 2 weight % of preserving agent and from 0.2 to 3 weight % of defoamer.

6. A process for combating noxious insects, plants or fungi, which comprises applying to these or the plants or soils infested by them an effective amount of pesticidal composition as claimed in claims 1 to 5 from aqueous dilutions.

7. Use of a pesticidal composition as claimed in claims 1 to 5 in plant protection.

## Revendications

1. Pesticides liquides sous la forme de concentrés en suspension aqueux qui contiennent comme substance active l'insecticide endosulfane, un fongicide du groupe des composés du triphénylétain, du carbendazim, du maneb ou du mancozeb, ou comme herbicide un dérivé de la triazine ou un dérivé de l'urée, caractérisés en ce qu'ils contiennent, en plus de la substance active ou du mélange de substances actives, un sel alcalin d'un hémiester de l'acide sulfosuccinique, préparé par réaction d'un éther polyglycolique d'un produit de condensation d'un monooctyl- ou mononnonylphénol et du formaldéhyde dans un rapport molaire de l'alkylphénol au formaldéhyde de 2:1 à 10:9, qui contient 2 à 8 moles de motifs oxyde d'alkylène, en particulier de motifs oxyde d'éthylène, par mole d'alkylphénol, avec l'anhydride maléique et un sulfite alcalin, ainsi qu'un sel alcalin d'un acide lignosulfonique en mélange avec des parties égales d'un silicate alcalino-terreux susceptible de gonfler.

2. Pesticides liquides suivant la revendication 1, caractérisés en ce qu'on utilise comme silicate susceptible de gonfler le minéral montmorillonite.

3. Pesticides liquides, caractérisés en ce qu'ils contiennent comme dérivé du triphénylétain de l'hydroxyde de fentine, comme dérivé de la triazine la substance active atrazine ou simazine, et comme dérivé de l'urée la substance active diurone du chlortolurone.

4. Pesticides liquides suivant l'une des revendications 1 à 3, caractérisés en ce qu'ils contiennent 5 à 60% en poids d'une substance active ou d'un mélange de substances actives pesticides, 0,5 à 30% en poids d'un sel alcalin d'un hémiester de l'acide sulfosuccinique et 0,5 à 4% en poids d'un mélange à parties égales d'un sel alcalin de l'acide lignosulfonique et d'un silicate alcalino-terreux susceptible de gonfler.

5. Pesticides liquides suivant la revendication 4, caractérisés en ce qu'ils contiennent en outre 0 à 0,2% en poids d'un polysaccharide susceptible de gonfler, 0 à 3,0% en poids de mouillants et de dispersants ordinaires, 0 à 10% en poids d'antigel, 0 à 8% en poids d'agent améliorant la sécurité d'emploi, 0 à 2% en poids de conservateur et 0,2 à 3% en poids d'antimousse.

6. Procédé de lutte contre les insectes, plantes ou champignons nuisibles, caractérisé en ce qu'on applique sur ceux-ci, ou sur les plantes ou sols qu'ils ont envahi, une quantité active d'un pesticide suivant les revendications 1 à 5 à partir de dilutions aqueuses.

7. Utilisation d'un pesticide suivant les revendications 1 à 5 pour la protection de plantes.